Europäisches Patentamt

European Patent Office

Office européen des brevets

(11) Publication number: **0 080 576**
**B1**

## (12) EUROPEAN PATENT SPECIFICATION

(45) Date of publication of patent specification: **27.12.85**

(21) Application number: **82108993.5**

(22) Date of filing: **29.09.82**

(51) Int. Cl.⁴: **B 23 K 3/04, C 21 D 1/10,**
**G 01 J 5/02**

(54) Heating apparatus for brazing.

(30) Priority: **25.11.81 US 324910**

(43) Date of publication of application:
**08.06.83 Bulletin 83/23**

(45) Publication of the grant of the patent:
**27.12.85 Bulletin 85/52**

(84) Designated Contracting States:
**BE CH DE FR GB IT LI NL SE**

(56) References cited:
**DE-U-6 949 043**
**US-A-2 281 334**

**Patent Abstracts of Japan, vol. 6, no. 8, 19**
**January 1982 & JP-A-56-133629 (Cat. Y)**

(73) Proprietor: **WESTINGHOUSE ELECTRIC**
**CORPORATION**
**Westinghouse Building Gateway Center**
**Pittsburgh Pennsylvania 15222 (US)**

(72) Inventor: **Burack, Robert David**
**327 Challen Drive**
**Pittsburgh Pennsylvania (US)**
Inventor: **Brachold, Rudolph William**
**53 West Saddle River Road**
**Waldwick New Jersey (US)**

(74) Representative: **Holzer, Rupprecht, Dipl.-Ing.**
**Philippine-Welser-Strasse 14**
**D-8900 Augsburg (DE)**

## Description

This invention relates to heating apparatus and more particularly to heating apparatus for attaching a sleeve within a tube by a brazing procedure.

In tube-type heat exchangers, a first fluid flows through the tubes of the heat exchanger while a second fluid surrounds the outside of the tubes such that heat exchange occurs between the two fluids. Occasionally, one of the tubes can become defective such that a leak occurs therein which allows the fluids to mingle. When this occurs, it is sometimes necessary to either plug the tube so that the fluid does not flow through the tube or repair the tube, thereby preventing leakage from the tube.

In nuclear reactor power plants, the tube-type heat exchangers are commonly referred to as steam generators. When a defect occurs in a tube of a nuclear steam generator that allows the coolant in the tube to mingle with the coolant outside of the tube, a more significant problem arises. Not only does this situation create an ineffective heat exchanger, but it also creates a radioactive contamination problem. Since the fluid flowing in the tubes of a nuclear steam generator is generally radioactive, it is important that it not be allowed to leak from the tubes and contaminate the fluid surrounding the tubes. Therefore, when a leak occurs in a nuclear steam generator heat exchange tube, the heat exchange tube must either be plugged or repaired.

There are several methods known in the art for repairing heat exchange tubes, however, many of these methods are not applicable to repair of heat exchange tubes wherein the tube is not readily accessible. For example, in a nuclear steam generator the physical inaccessibility of defective heat exchange tubes and the radioactive nature of the environment surrounding the heat exchange tubes presents unique problems to repairing heat exchange tubes that do not normally exist in other heat exchangers. For these reasons, special methods have been developed for repairing heat exchange tubes in nuclear steam generators. Typically, the method used to repair a heat exchange tube in a nuclear steam generator is one in which a metal sleeve having an outside diameter slightly smaller than the inside diameter of the defective tube is inserted into the defective tube and attached to the defective tube to bridge the defective area of the tube. This type of repair method is generally referred to as "sleeving". Previous sleeving development work has been concerned with obtaining a relatively leakproof joint between the sleeve and the tube by brazing, arc welding, explosive welding, or other joining means. Due to the need for cleanliness, close fittings, heat application, and atmospheric control, these metallurgical bonding techniques have problems which are not easily solvable in areas such as nuclear steam generators where human access is limited.

In the braze sleeving methods such as the one described in European Patent No. 0,047,410 entitled "Braze Sleeving Method" which is assigned to the Westinghouse Electric Corporation, it is necessary to heat the braze material in order to form the braze bond between the sleeve and the tube. One way to heat the braze material is by inserting a heating apparatus in the sleeve so as to internally heat the sleeve and the braze material. Such heating apparatus are known, generally, from US Patents Nos. 2,510,942 and 3,491,453. However, due to the inaccessibility of the work area, the power requirements for the heating apparatus, and the need to carefully control the brazing times and temperatures, a specially designed internal brazing wand is recommended for use in such a process.

It is therefore, the principal object of the present invention to provide a brazing wand capable of being inserted in a heat exchange tube for precisely controlling the temperature and time of the brazing process.

With this object in view, the present invention resides in a heating apparatus for insertion into a tube for heating the tube, said apparatus comprising an electrically insulating protective tubular cover member adapted to be inserted into said tube, an induction coil disposed within said protective cover member said induction coil having a helically wound portion and a substantially straight leg extending through said helically wound portion, and means for connecting said induction coil to an electric power supply, characterized in that said induction coil consists of an electrically conductive tube adapted to receive a cooling fluid circulated therethrough and that a fiber optic cable is disposed within said coil and is provided with a tip and said tubular cover member has a window formed therein adjacent said tip so as to permit light emitted from said tube to reach said fiber optic cable for sensing the temperature of said tube.

Optical sensing of temperatures using a light-receiving pyrometer is known per se from DE—A—6,949,043.

The electrical current is used to heat a member to be brazed while the coolant is used to control the temperature of the heating apparatus. The invention will become more readily apparent from the following description of a preferred embodiment thereof shown, by way of example only, in the accompanying drawings, wherein:

Figure 1 is a cross-sectional view in elevation of the brazing wand disposed in a tube;

Figure 2 is a partial cross-sectional view in elevation of the brazing wand; and

Figure 3 is a view along line III—III of Figure 2.

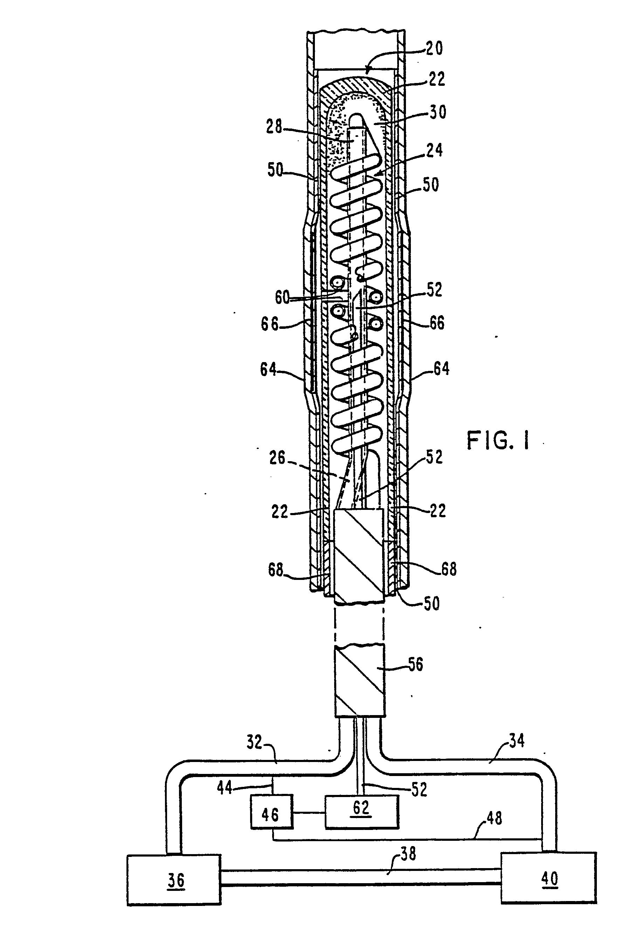

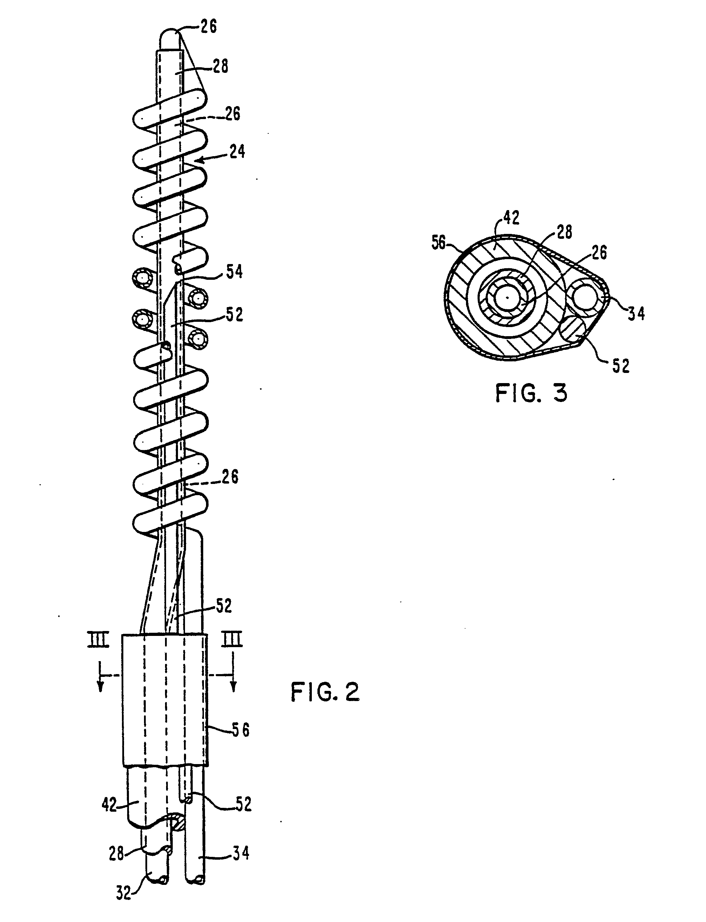

Referring to Figures 1—3, a brazing wand 20 comprises an external cover 22 which may be a ceramic sheath such as aluminum oxide and serves to protect the internals of brazing wand 20. An electrically conductive coil 24 which may be a copper tube having a 6.4 mm outside diameter and capable of conducting a fluid therethrough is disposed in external cover 22. Coil 24 may be formed to have a substantially straight leg 26 in the center and formed in a helical shape around leg 26. Generally, coil 24 is a continuous tubular member formed as described above for conducting a cooling fluid therethrough such as water and capable of conducting an electrical current through the metal portion thereof. The helical portion of coil 24 may be constructed to be long enough to extend beyond the area to be brazed so as to effectively heat that area. Typically, the helical portion may be approximately 5—13 cm in length, 11.5 mm in diameter, and may have approximately 5—25 turns. Preferably, the helical portion has approximately 11 turns.

An electrically insulating tubular member 28 such as a Teflon tube is disposed over leg 26 to maintain electrical insulation between leg 26 and the helical portion of coil 24 without interpreting the electrical connection that exists in the metal itself such that electrical current may pass through leg 26 and into the helical portion of coil 24. Tubular member 28 thus prevents short circuiting of the electrical path of coil 24. A packing material 30 such as Sauerisen is disposed in external cover 22 and around coil 24 for maintaining the spacing between the elements in external cover 22 and for providing for stability of those elements.

Leg 26 extends to and becomes first conduit 32 while the other end of coil 24 extends to and becomes second conduit 34. First conduit 32 is connected to pumping mechanism 36 which may be a water pump capable of pumping a coolant such as water at a rate of about 1—3 l/min and at a pressure of about 123—152 Pa. Preferably, the coolant is pumped at about 2 l/min and at a pressure of 137 Pa. Pumping mechanism 36 which may be located approximately 6 m from brazing wand 20 is connected by third conduit 38 to cooling mechanism 40 with cooling mechanism 40 being connected to said conduit 34 thereby completing a closed coolant flow system. Cooling mechanism 40 may be a freon type refrigeration unit and is capable of maintaining the coolant between approximately 10—38°C and preferably at about 21°C. Of course, the flow of coolant through the system may be in either direction as long as the coolant acts to maintain coil 24 below a reasonable temperature which is generally about 38°C. The cooling system thereby provides a system for pumping a coolant through coil 24 to maintain the temperature of coil 24 at a reasonable level.

A conductive outer tube 42 which may be copper is placed around tubular member 28 and soldered full length to second conduit 34. With leg 26 (which becomes first conduit 32) covered by tubular member 28 in the region where tubular member 28 is covered by outer tube 42 and with second conduit 34 (which becomes coil 24) soldered to outer tube 42, the combination forms a coaxial power cable for transmitting the electrical power to coil 24. Power lead 44 is connected to first conduit 32 and to power supply 46 and power lead 48 is connected to second conduit 34 and to power supply 46 thereby completing the power circuit for brazing wand 20. Power supply 46 may be a 20 KW induction heating power supply capable of operating between 200—400 KHz and preferably at about 250 KHz. Power supply 46 may be chosen from those well known in the art or it may be a modified compact power supply suitable for use at remote locations. In this manner, an electrical current, dissipating approximately 7 KW, flows through leg 26 and coil 24 so as to establish a magnetic field around coil 24 for inducing an electrical current in the member to be brazed thereby heating the member such as sleeve 50.

An optical cable 52 which may be a 0.6 mm diameter single strand quartz fiber optic cable is disposed inside coil 24 and along tubular member 28 for viewing the light generated by the heating of sleeve 50. Optical cable 52 has a tip 54 which is located approximately midway along the length of coil 24 and is ground at a 45° angle so as to act as a prism to reflect the light along optical cable 52. Optical cable 52 may be attached to outer tube 42 by epoxy and wrapped with insulating tape 56 to hold outer tube 42, second conduit 34 and optical cable 52 in an assembly. Insulating tape 56 also serves to electrically insulate outer tube 42. In addition, external cover 22 and packing material 30 have a bore 60 therein forming a window in alignment with tip 54 for conducting light to tip 54.

Optical cable 52 is connected to optical system 62 for detecting the light produced by heating sleeve 50 and thus determining the temperature of sleeve 50. Optical system 62 may also be connected to power supply 46 for automatically adjusting the power of coil 24 to achieve the desired brazing temperature. Optical system 62 may also have a digital display of temperature to enable manual temperature manipulation. Optical system 62 may include a two color pyrometer chosen from those well known in the art, modified to accept a fiber optic input, which is selected because it is not light intensity dependent. Therefore, light intensity variations due to clouding of the optical system will not create temperature variations in optical system 62 readings. An optical system of this type is capable of sensing temperatures in the range of 700°C to 1430°C while coil 24 is capable of generating temperature in sleeve 50 of up to 1350°C.

In addition, a stainless steel tube 68 may be attached to the lower end of external cover 22 and around insulating tape 56.

When it is desired to braze a sleeve 50 to the inside of a heat exchange tube 64, sleeve 50 with braze material 66 thereon is inserted into tube 64 and sleeve 50 is internally expanded into close contact with 64. Then brazing wand 20 is inserted into sleeve 50 so that coil 24 spans the joint to be brazed as shown in Figure 1. Power supply 46 is then set to the desired power level to produce the desired temperature cycle in the braze material and sleeve 50 which may be approximately 1180°C. Pumping mechanism 36 is also activated which causes the coolant to flow through coil 24.

The electrical current flowing through coil 24 establishes a magnetic field around coil 24 which induces an electrical current in sleeve 50 thereby generating heat in sleeve 50 in the area to be brazed. The heat produces light which is sensed by optical cable 52 and relayed to optical system 62 which determines the temperature of sleeve 50. This information is continuously relayed to power supply 46 to continuously adjust the power level to achieve the preprogrammed brazing cycle. The brazing temperature is held for the proper time interval thus completing the brazing process. When complete, brazing wand 20 is deactivated and removed from sleeve 50.

Therefore, the invention provides a brazing wand capable of being inserted in a heat exchange tube for precisely controlling the temperature and time of the brazing process.

## Claims

1. A heating apparatus for insertion into a tube (64) for heating the tube (64), said apparatus comprising an electrically insulating protective tubular cover member (22) adapted to be inserted into said tube (64), an induction coil (24) disposed within said protective cover member (22) said induction coil (24) having a helically wound portion and a substantially straight leg (26) extending through said helically wound portion, and means for connecting said induction coil (24) to an electric power supply, characterized in that said induction coil (24) consists of an electrically conductive tube adapted to receive a cooling fluid circulated therethrough and that a fiber optic cable (52) is disposed within said coil (24) and is provided with a tip (54) and said tubular cover member (22) has a window (60) formed therein adjacent said tip (54) so as to permit light emitted from said tube (64) to reach said fiber optic cable (52) for sensing the temperature of said tube (64).

2. A heating apparatus according to claim 1, characterized in that said fiber optic cable (52) disposed within said coil (24) is provided with a 45° angle face at its tip with said face oriented toward said window (60).

3. A heating apparatus according to claim 1 or 2, characterized in that said coil (24) has 5—25 turns.

4. A heating apparatus according to claim 1, 2 or 3, characterized in that said fiber optic cable (52) is a single strand quartz fiber optic cable.

5. A heating apparatus according to any of claims 1 to 4, characterized in that a two colour pyrometer is connected to said fiber optic cable (52) for determining the temperature of said tube (64).

## Revendications

1. Dispositif de chauffage à introduire dans un tube (64) pour chauffer le tube (64), cet appareil étant constitué d'une gaine (22) tubulaire protectrice électriquement isolante conçue pour être introduite dans le tube (64), un enroulement inducteur (24) disposé à l'intérieur de la gaine protectrice (22), l'enroulement inducteur (24) ayant une partie enroulée hélicoïdalement et une tige (26) sensiblement rectiligne s'étendant à travers la partie enroulée hélicoïdalement, et un moyen pour relier l'enroulement inducteur (24) à une source de courant électrique, caractérisé en ce que l'enroulement inducteur (24) est constitué d'un tube électriquement conducteur conçu pour recevoir un fluide de refroidissement que l'on fait circuler à travers lui et en ce qu'un câble optique (52) à fibres est disposé dans l'enroulement (24) et comporte une pointe (54) et dans la gaine tubulaire (22) est ménagée une fenêtre (60) avoisinant la pointe (54) afin de permettre à la lumière émise depuis le tube (64) d'atteindre le câble optique (52) à fibres pour détecter la température du tube (64).

2. Dispositif de chauffage selon la revendication 1, caractérisé en ce que le câble (52) optique à fibres disposé dans l'enroulement (24) possède une face inclinée à 45° à son extrémité, cette face étant orientée vers la fenêtre (60).

3. Dispositif de chauffage selon la revendication 1 ou 2, caractérisé en ce que l'enroulement (24) a de 5 à 25 spires.

4. Dispositif de chauffage selon la revendication 1, 2 ou 3, caractérisé en ce que le câble optique (52) à fibres est un câble optique à fibres de quartz à un seul brin.

5. Dispositif de chauffage selon l'une quelconque des revendications 1 à 4, caractérisé en ce qu'un pyromètre bicolore est relié au câble optique (52) à fibles pour déterminer la température de tube (64).

## Patentansprüche

1. Heizgerät zum Einführen in ein Rohr (64) zwecks Erwärmen des Rohres (64), wobei das Gerät ein elektrisch isolierendes rohrförmiges Schutzabdeckteil (22), das in das genannte Rohr (64) einführbar ist, eine in dem Schutzabdeckteil (22) angeordnete Induktionsspule (24) mit einem schraubenlinienförmig gewundenen Abschnitt und einem im wesentlichen geradlinigen, durch den schraubenlinienförmig gewundenen Abschnitt hindurchverlaufenden Schenkel (26), und Mittel zum Anschluß der Induktionsspule (24) an eine elektrische Stromversorgung aufweist, dadurch gekennzeichnet, daß die Induktionsspule (24) aus einem elektrisch leitfähigen Rohr besteht, durch welches ein Kühlmedium hindurchzirkulierbar ist, und daß ein faseroptisches Kabel (52) innerhalb der Spule (24) angeordnet und mit einem Endstück (54) versehen ist und das rohrförmige Abdeckteil (22) im Bereich dieses Endstücks (54) ein darin gebildetes Fenster (60) aufweist, so daß von dem Rohr (64) emittiertes Licht in das faseroptische Kabel (52) eintreten kann, um die Temperatur des Rohres (64) zu erfassen.

2. Heizgerät nach Anspruch 1, dadurch gekennzeichnet, daß das innerhalb der Spule (24) angeordnete faseroptische Kabel (52) an seinem Endstück mit einer unter 45° abgewinkelten Stirnfläche versehen ist, die zu dem genannten Fenster (60) hin orientiert ist.

3. Heizgerät nach Anspruch 1 oder 2, dadurch gekennzeichnet, daß die Spule (24) etwa 5 bis 25 Windungen hat.

4. Heizgerät nach Anspruch 1, 2 oder 3, dadurch gekennzeichnet, daß das faseroptische Kabel (52) ein einadriges Quarzglasfaserkabel ist.

5. Heizgerät nach einem Ansprüche 1 bis 4, dadurch gekennzeichnet, daß an das faseroptische Kabel (52) ein Zwei-Farben-Pyrometer zur Bestimmung der Temperatur des Rohres (64) angeschlossen ist.

FIG. 1

FIG. 2

FIG. 3